# EUROPEAN PATENT APPLICATION

(11) **EP 4 535 819 A1**
(43) Date of publication of application: **09.04.2025**
(21) Application number: 23201430.8
(22) Date of filing: 03.10.2023
(51) Int. Cl.: H04R 1/10, H04R 27/00

(54) **HEARING DEVICE AND METHOD OF PROVIDING BROADCASTED AUDIO STREAM**

(71) Applicant: GN Hearing A/S, 2750 Ballerup (DK)
(72) Inventor: PEDERSEN, Thorkild Find, 2750 Ballerup (DK); PEDERSEN, Brian Dam, 2750 Ballerup (DK)
(74) Representative: Guardian IP Consulting I/S

(57) **Abstract**

The present disclosure relates to a method of providing a broadcasted audio stream using a hearing device configured for being worn at an ear of a user and an assistant device. The method comprises scanning, by the hearing device, for advertisements of available broadcasted audio streams and an associated audio streaming protocol, thereby obtaining broadcast information comprising data on available broadcasted audio streams; transmitting, by the hearing device, the broadcast information to an assistant device; presenting, by the assistant device, a list of available broadcasted audio streams to a user and awaiting user-selection of a broadcasted audio stream; transmitting user-selection information comprising data on the user-selected broadcasted audio stream from the assistant device to the hearing device; and providing, by the hearing device, the user-selected broadcasted audio stream. Further disclosed is a hearing device configured for being worn at an ear of a user and an assistant device. The hearing device comprising a wireless communications unit configured to scan for advertisements of available broadcasted audio streams and an associated audio streaming protocol, and thereby obtain broadcast information comprising data on available broadcasted audio streams. The hearing device is configured to transmit the broadcast information to an assistant device, receive user-selection information comprising data on a user-selected broadcasted audio stream from the assistant device, and provide the user-selected broadcasted audio stream to a user.

## Description

The present disclosure relates to a method of providing a broadcasted audio stream, and a hearing device comprising a wireless communications unit configured to scan for advertisements of available broadcasted audio streams and an associated audio streaming protocol.

### BACKGROUND OF THE INVENTION

The advent of digital technology has revolutionized the way we consume audio content. From music to podcasts, the demand for high-quality audio streaming services has grown exponentially. At the same time, assistive listening technologies for people with hearing difficulties has aimed at improving the ability of people with hearing loss to participate, move and generally orient themselves in their acoustic environment. This has led to the development of various devices and methods to facilitate the delivery of audio content to the end-user.

A broadcasted audio stream is an audio stream that is provided by as a wireless signal by a broadcast device. The audio stream is provided using a broadcast standard, which means that it does not require pairing between broadcast device and receiving device. Thus, the technology of broadcasted audio streams is envisioned to allow a hearing device user to select audio stream(s) to listen to without requiring an arduous pairing process with each broadcasting device.

There is thus a need for an improved method of providing a broadcasted audio stream using a hearing device configured for being worn at an ear of a user.

It is further an object to provide an improved hearing device.

### SUMMARY OF THE INVENTION

In a first aspect is provided a method of providing a broadcasted audio stream, and in a second aspect is provided a hearing device comprising a wireless communications unit configured to scan for advertisements of available broadcasted audio streams and an associated audio streaming protocol. In the aspects, the terms and features relate to the terms and features having the same name in the other aspects and therefore the descriptions and explanations of terms and features given in one aspect apply to the other aspects.

**In the first aspect,** a method of providing a broadcasted audio stream using a hearing device configured for being worn at an ear of a user and an assistant device is disclosed. The method comprises scanning for advertisements of available broadcasted audio streams and an associated audio streaming protocol, and thereby obtaining broadcast information comprising data on available broadcasted audio streams. The method further comprises transmitting the broadcast information to an assistant device. The method further comprises presenting, by the assistant device, the available broadcasted audio streams based on the received broadcast information to a user and awaiting user-selection of a broadcasted audio stream. The method further comprises transmitting user-selection information comprising data on the user-selected broadcasted audio stream from the assistant device to the hearing device. The method further comprises providing, by the hearing device, the user-selected broadcasted audio stream. Scanning for advertisements and transmission of broadcast information is performed by the hearing device.

**In the second aspect,** a hearing device is for being worn at an ear of a user disclosed. The hearing device comprises a wireless communications unit configured to scan for advertisements of available broadcasted audio streams and an associated audio streaming protocol, and thereby obtain broadcast information comprising data on available broadcasted audio streams. The hearing device is configured to transmit the broadcast information to an assistant device. The hearing device is further configured to receive user-selection information comprising data on a user-selected broadcasted audio stream from the assistant device. The hearing device is further configured to provide the user-selected broadcasted audio stream to a user.

A broadcasted audio stream is an audio stream that is provided by as a wireless signal by a broadcast device. The audio stream is provided using a broadcast standard, which means that it does not require pairing between broadcast device and receiving device. As an example, some versions of Bluetooth LE audio sharing allow multi-stream and broadcast audio features, and these features are being referred to as Auracast. Thus, in some embodiments, the associated audio streaming protocol is a Bluetooth audio streaming protocol, such as Bluetooth LE Audio. A broadcasted audio stream may be encrypted such that a security step, e.g. entry of a password, may be required in order for a receiving device to be able to provide the audio stream to its user. In the case of unencrypted broadcasted audio streams, any device configured for receiving the audio stream may listen in. Whether the audio stream is encrypted or unencrypted the broadcast device may transmit the audio signal without knowing how many receiving device, if any, are listening in on the broadcast. A broadcast device advertises the availability of an audio stream and the audio streaming protocol used for the broadcasting, i.e. the audio streaming protocol associated with the audio stream. The advertisement provides the transmission data for receiving devices, such as e.g. name of audio stream, content, configuration, etc. Thus, the broadcast device transmits an advertisement of each audio stream provided by it as well as the audio stream. A broadcasted audio stream may comprise a left and a right stereo audio stream.

### BRIEF DESCRIPTION OF THE DRAWINGS

In the following, exemplary embodiments of the invention are described in more detail with reference to the appended drawings, wherein:
FIGS. 1-4 show a flow diagram illustrating a method of providing a broadcasted audio stream according to some embodiments,
FIG. 5A illustrates an in-ear hearing device positioned within the ear canal of a user,
FIG. 5B illustrates a behind-the-ear hearing device positioned at a user's ear,
FIG. 6 schematically illustrates an in-ear hearing device according to some embodiments,
FIG. 7 schematically illustrates a behind-the-ear hearing device according to some embodiments, and
FIGS. 8A and 8B show swim lane diagrams of method of providing a broadcasted audio stream according to some embodiments.

### DETAILED DESCRIPTION

In the following various exemplary embodiments of the disclosed method of providing a broadcasted audio stream using a hearing device configured for being worn at an ear of a user and an assistant device, and a hearing device comprising a wireless communications unit configured to scan for advertisements of available broadcasted audio streams and an associated audio streaming protocol are described with reference to the appended drawings. The skilled person will understand that the accompanying drawings are schematic and simplified for clarity and therefore merely show details which are essential to the understanding of the invention, while other details have been left out. The elements shown in the drawings are not necessarily drawn to scale, but may primarily be illustrative of relative position, orientation, and function. Like reference numerals refer to like elements throughout. Like elements will therefore not necessarily be described in detail with respect to each figure.

The hearing device scans for advertisements and provides broadcast information to an assistant device, e.g. a smartphone, or the like. The assistant device may be a smartphone, smartwatch, tablet, computer, or the like. Communication between the hearing device and the assistant device may be facilitated by any of various known communication protocols. For example, the user-selection information may be transmitted via any of various known communication protocols such as e.g. Bluetooth, Wi-Fi, or NFC. These are common wireless communication technologies that can facilitate the transmission of information between the assistant device and the hearing device.

The assistant device provides a user interface to enable a user to select a broadcast to listen to, and then provides data on which broadcast the user chose to the hearing device. When the hearing device receives the user-selection information it joins the selected broadcast and provides the audio stream to the user of the hearing device.

Advantageously, the assistant device does not need to have the capability and/or programming needed to perform a scan for advertisements. Thus, a user of the hearing device may e.g. use a simpler assistant device. Further, the hearing device does not need to be configured for presenting an overview of available broadcasted audio streams, for example via a user interface on the hearing device. Further, the user of the hearing device and the user of the assistant device may be different; This allows for the user of the assistant device to aid the user of the hearing device.

In some embodiments, the method further comprises the hearing device being connected with the assistant device via a wired and/or a wireless connection, such as via a Bluetooth connection.

Presenting the available broadcasted audio streams may be done as text, e.g. as a list of some form, or using other forms of presentation information such as e.g. graphics, audio, haptics, etc. The assistant device may present the available broadcasted audio streams to a user as a list, such as a list that is provided in a GUI or which is read out loud.

In some embodiments, connection between the hearing device and the assistant device is maintained during the scanning for advertisements.

In some embodiments, the scanning for advertisements is performed for a scan duration being a limited period of time, such as for a pre-determined period of time and/or for a user-selected period of time. In some embodiments, the scan duration is set by the user actively interacting with the assistant device or with the hearing device, such as for a duration of time during which a user is actively requesting a scan. For example, the duration of time could be set by a user holding down a physical or virtual button on the assistant device or on the hearing device. In a preferred embodiment, the duration of time is set by a user holding down a virtual button in an app on the assistant device. Thus, the user may set the intended duration of scanning.

In some embodiments, the step of scanning for advertisements further comprises the hearing device determining active processes running on the hearing device, and, optionally, the hearing device further determining whether to stop or pause one or more active processes. The determination on active processes may be made prior to the scanning being initiated or it may be made during the scan. In this way, the hearing device may pause or stop active processes, such as active battery-requiring processes, during the scan for broadcasts, for example to ensure that enough power is available to perform the scan, and/or to conserve battery power, and/or to free up resources such as memory, or other. A paused process may be paused for the duration of the scan and automatically resumed at a time after the scan is finished, for example just after the scan is finished and/or a set time after the scan is finished. In some embodiments, the step of scanning for advertisements further comprises the hearing device stopping or pausing any audio streaming it was providing when it initiates the scanning for advertisements. In some embodiments, determining active processes comprises determining battery-drain data for one or more of the active processes, where the battery-drain data may comprise one or more of: how much power is being drained by the active process, and/or an estimate of the battery requirement for the continued running of the active process. In some embodiments, the determination of whether to pause one or more active processes is based at least partially on the battery-drain data. The determination of whether to pause one or more active processes may additionally, or optionally, be based at least partially on available battery power.

In some embodiments, the method further comprises: sending a scan request, from the assistant device to the hearing device, and the step of scanning for advertisements further comprising: the scanning being initiated in response to the scan request. In some embodiments, a scan request is sent in response to a user interaction, preferably with the assistant device, but the sending of a scan request may also be initiated by a user interaction with the hearing device. In some embodiments, the scanning for advertisements is initiated in response to a user interaction, such as a user interaction with the hearing device or a user interaction with the assistant device. A user interaction may be e.g. pushing a button, flipping a switch, giving a voice command, etc.

In some embodiment, the hearing device is configured to scan for advertisements of available unencrypted broadcasted audio streams and an associated audio streaming protocol. The hearing device may be configured to scan for both encrypted and unencrypted broadcasted audio streams. The hearing device and/or the assistant device may be configured to provide an interface for inputting a password.

In some embodiments, a hearing device is configured to be worn by a user. The hearing device may be arranged at the user's ear, on the user's ear, over the user's ear, in the user's ear, in the user's ear canal, behind the user's ear and/or in the user's concha, i.e., the hearing device is configured to be worn in, on, over and/or at the user's ear. The user may wear two hearing devices, one hearing device at each ear. The two hearing devices may be connected, such as wirelessly connected and/or connected by wires, such as a binaural hearing aid system.

The hearing device may be a hearable such as a headset, headphone, earphone, earbud, hearing aid, a personal sound amplification product (PSAP), an over-the-counter (OTC) hearing device, a hearing protection device, a one-size-fits-all hearing device, a custom hearing device or another head-wearable hearing device. Hearing devices can include both prescription devices and non-prescription devices.

The hearing device may be embodied in various housing styles or form factors. Some of these form factors are Behind-the-Ear (BTE) hearing device, Receiver-in-Canal (RIC) hearing device, Receiver-in-Ear (RIE) hearing device or Microphone-and-Receiver-in-Ear (MaRIE) hearing device. These devices may comprise a BTE unit configured to be worn behind the ear of the user and an in the ear (ITE) unit configured to be inserted partly or fully into the user's ear canal. Generally, the BTE unit may comprise at least one input transducer, a power source and a processing unit. The term BTE hearing device refers to a hearing device where the receiver, i.e. the output transducer, is comprised in the BTE unit and sound is guided to the ITE unit via a sound tube connecting the BTE and ITE units, whereas the terms RIE, RIC and MaRIE hearing devices refer to hearing devices where the receiver may be comprise in the ITE unit, which is coupled to the BTE unit via a connector cable or wire configured for transferring electric signals between the BTE and ITE units.

Some of these form factors are In-the-Ear (ITE) hearing device, Completely-in-Canal (CIC) hearing device or Invisible-in-Canal (IIC) hearing device. These hearing devices may comprise an ITE unit, wherein the ITE unit may comprise at least one input transducer, a power source, a processing unit and an output transducer. These form factors may be custom devices, meaning that the ITE unit may comprise a housing having a shell made from a hard material, such as a hard polymer or metal, or a soft material such as a rubber-like polymer, moulded to have an outer shape conforming to the shape of the specific user's ear canal.

Some of these form factors are earbuds, on the ear headphones or over the ear headphones. The person skilled in the art is well aware of different kinds of hearing devices and of different options for arranging the hearing device in, on, over and/or at the ear of the hearing device wearer. The hearing device (or pair of hearing devices) may be custom fitted, standard fitted, open fitted and/or occlusive fitted.

In some embodiments, the hearing device may comprise one or more input transducers. The one or more input transducers may comprise one or more microphones. The one or more input transducers may comprise one or more vibration sensors configured for detecting bone vibration. The one or more input transducer(s) may be configured for converting an acoustic signal into a first electric input signal. The first electric input signal may be an analogue signal. The first electric input signal may be a digital signal. The one or more input transducer(s) may be coupled to one or more analogue-to-digital converter(s) configured for converting the analogue first input signal into a digital first input signal.

In some embodiments, the hearing device may comprise one or more antenna(s) configured for wireless communication. The one or more antenna(s) may comprise an electric antenna. The electric antenna may be configured for wireless communication at a first frequency. The first frequency may be above 800 MHz, preferably a wavelength between 900 MHz and 6 GHz. The first frequency may be 902 MHz to 928 MHz. The first frequency may be 2.4 to 2.5 GHz. The first frequency may be 5.725 GHz to 5.875 GHz. The one or more antenna(s) may comprise a magnetic antenna. The magnetic antenna may comprise a magnetic core. The magnetic antenna may comprise a coil. The coil may be coiled around the magnetic core. The magnetic antenna may be configured for wireless communication at a second frequency. The second frequency may be below 100 MHz. The second frequency may be between 9 MHz and 15 MHz.

The hearing device comprises one or more wireless communication unit(s). The one or more wireless communication unit(s) may comprise one or more wireless receiver(s), one or more wireless transmitter(s), one or more transmitter-receiver pair(s) and/or one or more transceiver(s). At least one of the one or more wireless communications units is configured to scan for advertisements of available broadcasted audio streams and an associated audio streaming protocol. At least one of the one or more wireless communications units is configured to transmit the broadcast information to an assistant device. At least one of the one or more wireless communications units is configured to receive a broadcasted audio stream.

At least one of the one or more wireless communication unit(s) may be coupled to the one or more antenna(s). The wireless communication unit may be configured for converting a wireless signal received by at least one of the one or more antenna(s) into a second electric input signal. The hearing device may be configured for wired/wireless audio communication, e.g. enabling the user to listen to media, such as music or radio and/or enabling the user to perform phone calls.

In an embodiment, the wireless signal may originate from one or more external source(s) and/or external devices, such as spouse microphone device(s), wireless audio transmitter(s), smart computer(s) and/or distributed microphone array(s) associated with a wireless transmitter. The wireless input signal(s) may origin from another hearing device, e.g., as part of a binaural hearing system and/or from one or more accessory device(s), such as a smartphone and/or a smart watch.

In some embodiments, the hearing device may include a processing unit. The processing unit may be configured for processing the first and/or second electric input signal(s). The processing may comprise compensating for a hearing loss of the user, i.e., apply frequency dependent gain to input signals in accordance with the user's frequency dependent hearing impairment. The processing may comprise performing feedback cancelation, beamforming, tinnitus reduction/masking, noise reduction, noise cancellation, speech recognition, bass adjustment, treble adjustment and/or processing of user input. The processing unit may be a processor, an integrated circuit, an application, functional module, etc. The processing unit may be implemented in a signal-processing chip or a printed circuit board (PCB). The processing unit may be configured to provide a first electric output signal based on the processing of the first and/or second electric input signal(s). The processing unit may be configured to provide a second electric output signal. The second electric output signal may be based on the processing of the first and/or second electric input signal(s).

In some embodiments, the hearing device may comprise an output transducer. The output transducer may be coupled to the processing unit. The output transducer may be a receiver. It is noted that in this context, a receiver may be a loudspeaker, whereas a wireless receiver may be a device configured for processing a wireless signal. The receiver may be configured for converting the first electric output signal into an acoustic output signal. The output transducer may be coupled to the processing unit via the magnetic antenna. The output transducer may be comprised in an ITE unit or in an earpiece, e.g. Receiver-in-Ear (RIE) unit or Microphone-and-Receiver-in-Ear (MaRIE) unit, of the hearing device. One or more of the input transducer(s) may be comprised in an ITE unit or in an earpiece.

In some embodiments, a wireless communication unit may be configured for converting the second electric output signal into a wireless output signal. The wireless output signal may comprise synchronization data. At least one wireless communication unit may be configured for transmitting the wireless output signal via at least one of the one or more antennas.

In some embodiments, the hearing device may comprise a digital-to-analogue converter configured to convert the first electric output signal, the second electric output signal and/or the wireless output signal into an analogue signal.

In some embodiments, the hearing device may comprise a vent. A vent is a physical passageway such as a canal or tube primarily placed to offer pressure equalization across a housing placed in the ear such as an ITE hearing device, an ITE unit of a BTE hearing device, a CIC hearing device, a RIE hearing device, a RIC hearing device, a MaRIE hearing device or a dome tip/earmold. The vent may be a pressure vent with a small cross section area, which is preferably acoustically sealed. The vent may be an acoustic vent configured for occlusion cancellation. The vent may be an active vent enabling opening or closing of the vent during use of the hearing device. The active vent may comprise a valve.

In some embodiments, the hearing device may comprise a power source. The power source may comprise a battery providing a first voltage. The battery may be a rechargeable battery. The battery may be a replaceable battery. The power source may comprise a power management unit. The power management unit may be configured to convert the first voltage into a second voltage. The power source may comprise a charging coil. The charging coil may be provided by the magnetic antenna.

In some embodiments, the hearing device may comprise a memory, including volatile and nonvolatile forms of memory.

The hearing device may be a hearing device as provided in the second aspect.

In some embodiments, the associated audio streaming protocol is a Bluetooth audio streaming protocol, such as Bluetooth LE Audio. In some embodiments, the hearing device is further configured for being paired with the assistant device, such as via Bluetooth pairing. In some embodiments, the hearing device is further configured to maintain pairing between the hearing device and the assistant device during a scan for advertisements.

In some embodiments, the hearing device is further configured to perform a scan for advertisements for a period of time, such as for a pre-determined period of time and/or for a user-selected period of time. In some embodiments, the hearing device is further configured to perform a scan for advertisements exclusively for a duration of time during which the assistant device is requesting, such as intermittently requesting, a scan or for at duration of time during which a user is actively interacting with the hearing device.

In some embodiments, the hearing device is further configured to determine active processes running on the hearing device, and, optionally, the hearing device is further configured to determine whether to pause one or more active processes. The determination on active processes may be made prior to the scanning being initiated or it may be made during the scan. In this way, the hearing device may pause or stop active processes, such as active battery-requiring processes, during the scan for broadcasts, for example to ensure that enough power is available to perform the scan, and/or to conserve battery power, and/or to free up resources such as memory, or other. A paused process may be paused for the duration of the scan and automatically resumed at a time after the scan is finished, for example just after the scan is finished and/or a set time after the scan is finished. In some embodiments, the hearing device is further configured to stop or pause any audio streaming it was providing when a scan for advertisements is initiated. In some embodiments, the hearing device is further configured to determine battery-drain data for one or more of the active processes, where the battery-drain data may comprise one or more of: how much power is being drained by the active process, and/or an estimate of the battery requirement for the continued running of the active process. In some embodiments, the determination of whether to pause one or more active processes is based at least partially on the battery-drain data. The determination of whether to pause one or more active processes may be based at least partially on available battery power.

In some embodiments, the hearing device is further configured to initiate a scan for advertisements in response to a scan request from the assistant device and/or in response to a user interaction with the hearing device.

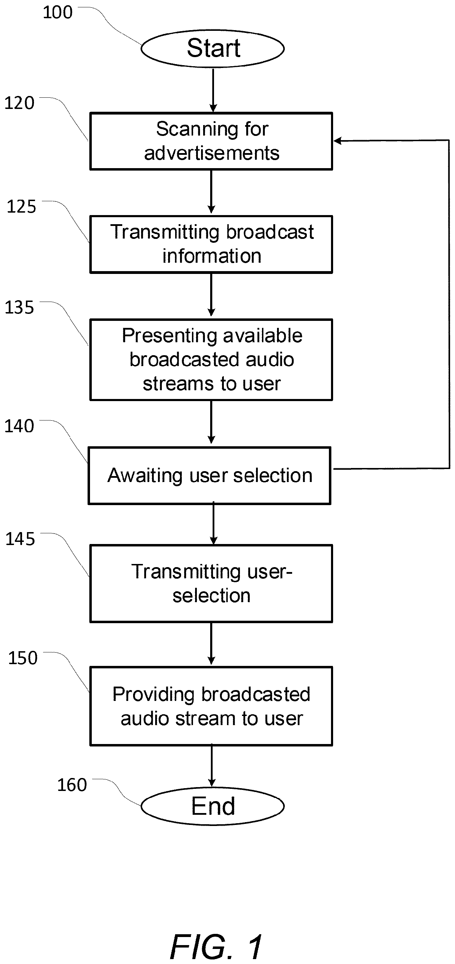

**FIG. 1** shows a flow diagram illustrating a method of providing a broadcasted audio stream according to some embodiments.

The method comprises scanning 120 for advertisements of available broadcasted audio streams and an associated audio streaming protocol, and thereby obtaining broadcast information comprising data on available broadcasted audio streams, transmitting 125 the broadcast information to an assistant device, presenting 135, by the assistant device, the available broadcasted audio streams to a user based on the received broadcast information, and awaiting user-selection of a broadcasted audio stream, transmitting 145 user-selection information comprising data on the user-selected broadcasted audio stream from the assistant device to the hearing device, and providing 150, by the hearing device, the user-selected broadcasted audio stream, wherein scanning for advertisements and transmission of broadcast information is performed by the hearing device.

The process begins in step 100 and ends in step 160 with a selected broadcasted audio stream being provided to a user of a hearing device.

In step 120, the hearing device scans for advertisements of available broadcasted audio streams and an audio streaming protocol associated with each broadcasted audio stream. The scanning for advertisements may be performed for a scan duration being a limited period of time, such as for a pre-determined period of time and/or for a user-selected period of time.

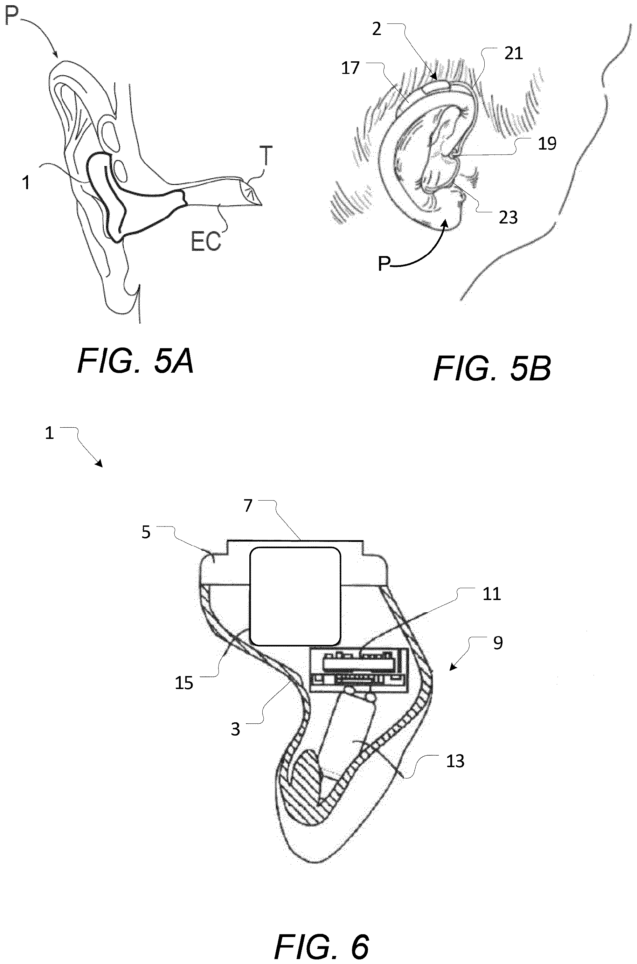

In step 125, the hearing device transmits the broadcast information obtained from the scan to an assistant device, such as to a smartphone, smartwatch, tablet, computer, or the like. Such devices are commonly used and may provide a convenient interface for a user to select the desired audio stream as discussed below. The hearing device may be a hearing device as illustrated in figs. 5-7.

In step 135, the assistant device, having receiving the broadcast information on available broadcasted audio streams, presents this information to the user in a suitable manner. For example, the assistant device may present a user with a GUI on which the available broadcasted audio streams are listed or otherwise represented for the user to make a selection. A listing could e.g. show a name for each broadcasted audio stream and possibly other information such as e.g. whether a security step must be completed in order to listen in on the broadcast.

In step 140, the assistant device awaits a user of the device selecting one of the presented available broadcasted audio streams. The user-selection of a broadcasted audio stream may be made via any of well-known interfaces such as a touch interface, voice command, and/or gesture control. The assistant device, or the hearing device, may provide a mechanism on the device, e.g. a button, a swipe, a switch, or the like, which the user may utilise to select a broadcast.

After or during step 140, the process may return to step 120 and continue scanning for advertisements, while the assistant device awaits user selection of one of the presented available broadcasts. Alternatively, the scanning for advertisements may have continued, while the broadcast information was transmitted and available broadcasts being presented. In this case, the process may return to step 125 and transmit broadcast information, such as all broadcast information available to the hearing device at the time or alternatively only changes in broadcast information such as broadcast information obtained after a previous transmission of broadcast information.

In step 145, the assistant device transmits user-selection information to the hearing device. The user-selection information comprises data on the user-selected broadcasted audio stream, such as the name or other identifying data on the broadcasted audio stream that the user of the assistant device has selected from the presentation on the assistant device. This transmission of information enables the hearing device to receive the information necessary for it to provide the desired broadcasted audio stream to the user of the hearing device.

In step 150, the hearing device joins the selected broadcast and provides the audio to the user of the hearing device.

In essence, the hearing device and the assistant device work in tandem to provide a seamless audio streaming experience to the user. The assistant device receives the broadcast information from the hearing device, presents it, and transmits the user's selection, while the hearing device receives information on the user's selection and delivers the selected audio stream to the user of the hearing device.

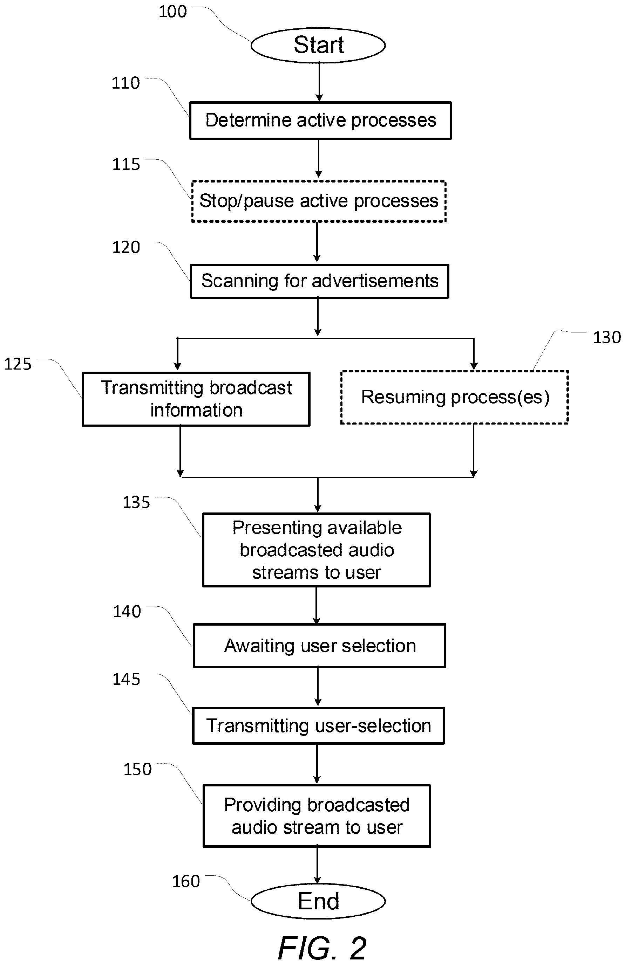

**FIG. 2** shows a flow diagram illustrating a method of providing a broadcasted audio stream according to some embodiments.

Steps 100, 120, 125, 135, 140, 145, 150, and 160 may be as described in connection with fig. 1.

In step 110, the hearing device determines, which, if any, active processes are running on it. The determination may comprise determining battery-drain data for one or more of the active processes, where the battery-drain data may comprise one or more of: how much power is being drained by the active process, and/or an estimate of the battery requirement for the continued running of the active process.

In optional step 115, the hearing device determines whether to pause or stop one or more active processes. The determination of whether to pause one or more active processes may be based at least partially on the battery-drain data. The determination of whether to pause one or more active processes may be based at least partially on the hearing device's available battery power.

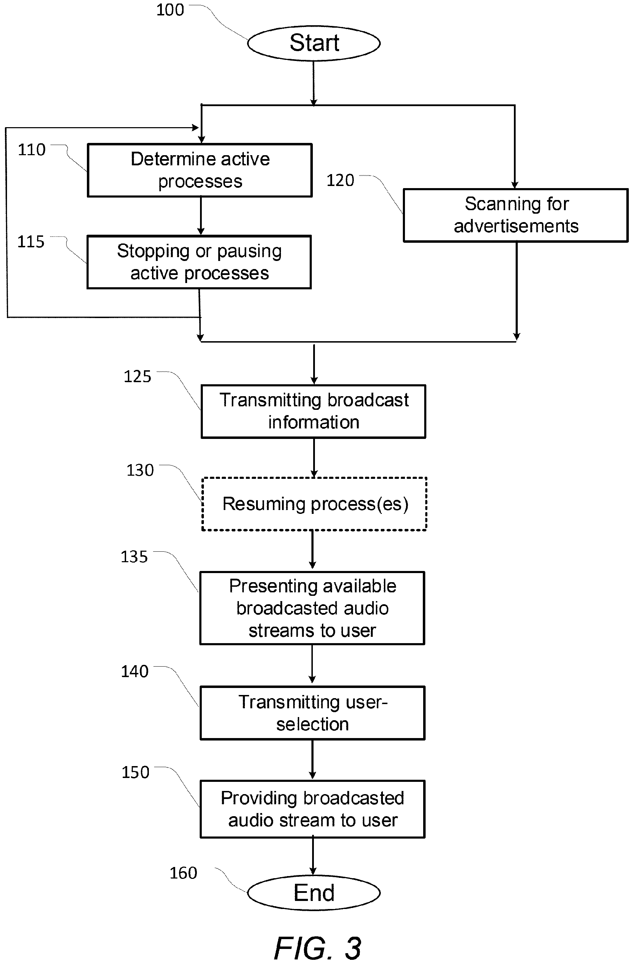

In optional step 130, one or more processes, which were paused, for example paused in step 115, may be resumed. In the flow chart in fig. 2, the determination to resume one or more paused processes is show as happening substantially concurrently with transmission of broadcast information in step 125. Alternatively, or additionally, resumption of one or more paused processes may occur after the transmission of broadcast information as outlined in the flow chart in fig. 3. In some embodiments, the determination of active processes may be made both prior to the scan and during the scan for advertisements.

Generally one or more of the method steps illustrated in figs. 1-4 may occur earlier or later in the flow than illustrated, and possibly at the same time as one or more other steps, as long as the timing of each action continues to make sense within the disclosure herein.

**FIG. 3** shows a flow diagram illustrating a method of providing a broadcasted audio stream according to some embodiments.

Steps 100, 120, 125, 135, 140, 145, 150, and 160 may be as described in connection with fig. 1. Steps 110 and 115 may be as described in connection with fig. 2 with the difference being that the determination of active processes and the determination to stop or pause one or more active processes happens during the scan for advertisements. In some embodiments, the determination of active processes may be made both prior to the scan and during the scan for advertisements.

As described in connection with fig. 2, processes which were paused are resumed in step 130, which is shown following the transmission of broadcast information in step 125. However, in some embodiments, one or more paused processes may be resumed during the scanning for advertisements. Thereby, the hearing device may dynamically pause and resume processes running on it during the scan for advertisements.

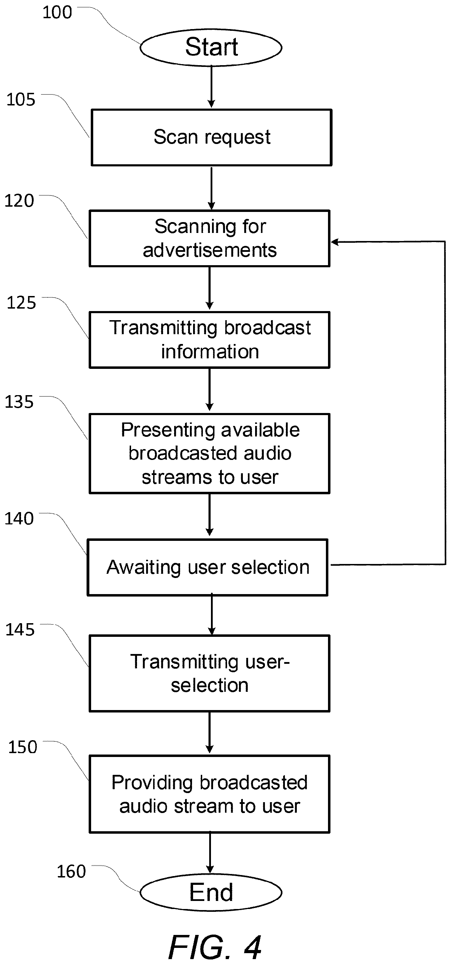

**FIG. 4** shows a flow diagram illustrating a method of providing a broadcasted audio stream according to some embodiments.

Steps 100, 120, 125, 135, 140, 145, 150, and 160 may be as described in connection with fig. 1.

In step 105, a scan request is detected by the hearing device or the assistant device. The scan request may be in response to a user interaction with the hearing device or with the assistant device, or it may be in response to an automated process.

A user interaction with the hearing device may be e.g. pushing a button, flipping a switch, giving a voice command, or the like. The hearing device may be configured to initiate the scanning for advertisements in step 120 based on the user interaction or the scan request.

A user interaction with the assistant device may likewise be e.g. pushing a button, flipping a switch, giving a voice command, or the like. A button, switch, etc. may be virtual, such as part of an app running on the assistant device. The scan request may be sent, from the assistant device to the hearing device, and the step of scanning for advertisements may be initiated in response to the scan request.

The scanning for advertisements may be performed for a scan duration being a limited period of time, such as for a pre-determined period of time and/or for a user-selected period of time. In some embodiments, the scan duration is determined by the user actively interacting with the assistant device or with the hearing device. For example, the scan duration may be the duration of time during which a user is actively requesting a scan. For example, the duration of time could be set by a user holding down a physical or virtual button on the assistant device or on the hearing device. In a preferred embodiment, the duration of time is set by a user holding down a virtual button in an app on the assistant device.

**FIG. 5A** shows the pinna P of a user's ear as well as parts of the inner ear, and illustrates an in-ear hearing device 1 positioned within the ear canal, EC. When the in-ear hearing device 1 is in place within the user's ear canal EC, its receiver, which is typically arranged in the proximal end of the in-ear hearing device 1, is close to the user's tympanic membrane T.

**FIG. 5B** shows the pinna P of a user's ear from a viewpoint slightly above the user's ear. A behind-the-ear (BTE) type hearing device 2 is illustrated in its operating position with a behind-the-ear part 17 behind the ear, i.e. behind the pinna P, of the user. An in-the-ear part 19, also referred to as an earpiece, is positioned in its operating position, where it is at least partly inserted within the ear canal of the user. In a manner well known a tube 21 connects the behind-the-ear part 17 and the in-the-ear part 19. The earpiece 19 may accommodate one or more microphones positioned at the entrance to the ear canal for reception of incoming sound and for provision of a corresponding output signal that may be combined with output signals from one or more microphones accommodated in the behind-the-ear part 17. Coupled to the in-the-ear part 19 may be a structure designed to secure the in-the-ear part in its operating position such as e.g. a mould, or a flexible arm 23 intended to be positioned inside the pinna P for retaining the earpiece 19 in its intended position.

**FIG. 6** schematically illustrates a wirelessly rechargeable in-ear hearing device 1, which is made to be positioned at least partly within the ear canal EC of a user, and which comprises a wireless communications unit configured to scan for advertisements of available broadcasted audio streams and an associated audio streaming protocol. The in-ear hearing device 1 may be configured to perform one or more of the method steps disclosed herein.

Hearing aids of this type may be those known as invisible-in-canal (IIC), completely-in-canal (CIC), in-the-canal (lTC), or in-the-ear (ITE). To protect the components within it, the in-ear hearing device 1 has a shell intended to help keep out ear wax, dirt, water, oil etc. The shell may comprise one or more sidewalls 3 and a faceplate 5 having a faceplate surface 7.

One or more of the sidewalls 3 form an in-ear part 9, which sits at least partially inside the ear canal EC of the user, when the in-ear hearing device 1 is in use. The in-ear part 9 is thus shaped to fit inside an ear canal EC and may be further individually shaped to fit inside the ear canal EC of a particular user. Such an individually shaped in-ear hearing device is often referred to as a custom hearing device and may be made by a process, which entails obtaining a physical or computerized model of the part of the particular user's ear canal.

When the in-ear hearing device 1 is in place within the user's ear canal (EC), the faceplate surface 7 faces towards the outside of the ear canal (EC), i.e. in a direction generally opposite the eardrum. In some embodiments of an in-ear hearing devices 1, the faceplate surface 7 has one or more microphone openings and possibly one or more buttons, switches, etc. with which the user can interact with the in-ear hearing device 1, for example to change settings, turn the in-ear hearing device 1 on/off, initiate, or continue, a scanning for broadcasted audio streams. In the embodiment in fig. 6, the faceplate surface 7 is the outer surface of a faceplate 5. The faceplate 5 may be very flat or have a significant thickness when compared to the rest of the hearing device. The faceplate may be formed as an integral part or as a separate part of the in-ear hearing device 1.

The one or more sidewalls 3 will usually not contain microphones, buttons, switches, etc. as the one or more sidewalls 3 will typically be adjacent to, or face toward, a part of the user's ear or ear canal, when the in-ear hearing device 1 is in place. If the in-ear hearing device 1 is of a type that is positioned far within the user's ear canal in such a way that it is difficult or near impossible for the user to grab the shell itself for removal, the in-ear hearing device 1 typically comprises a means for aiding in the removal of the in-ear hearing device 1, e.g. a pull out wire.

The in-ear hearing device has several hearing device components arranged within the hearing device shell, such as electronics 11 and a receiver 13, i.e. a speaker, where the electronics may comprise electronic components and circuits that create, process, and/or cancel audible sound. The receiver 13 is typically arranged in the proximal end of the in-ear hearing device 1 such that it is close to the eardrum of the user when the hearing device 1 is inserted into the ear canal EC of the user. The electronics 11 may further comprise a processing unit configured to perform one or more of the method steps disclosed herein.

The electronics 11 may further comprise the wireless communications unit configured to scan for advertisements of available broadcasted audio streams and an associated audio streaming protocol. The wireless communications unit for scanning for advertisements may be configured to scan for broadcasted audio streams having a Bluetooth audio streaming protocol, such as Bluetooth LE Audio. The in-ear hearing device 1 may be configured to perform a scan for advertisements for a period of time, such as for a pre-determined period of time and/or for a user-selected period of time. Further, the hearing device may be configured to initiate a scan for advertisements in response to a scan request from an assistant device and/or in response to a user interaction with the hearing device. For example, the hearing device may be configured to perform the scan for advertisements exclusively for a duration of time during which an assistant device is requesting a scan and/or for at duration of time during which a user is actively interacting with the hearing device.

The in-ear hearing device 1 may be configured for being paired with an assistant device, such as via Bluetooth pairing. If paired with an assistant device, the hearing device 1 may maintain pairing between the hearing device and the assistant device during a scan for advertisements. Thus, the hearing device may be configured to maintain pairing between the hearing device and the assistant device during a scan for advertisements.

To supply power to at least the electronics 11 and the receiver 13, the hearing device 1 has a battery 15, which may be a non-rechargeable or a rechargeable battery, for example a rechargeable battery configured to be charged by inductive charging. Thus, the in-ear hearing device 1 may comprise inductive charging circuitry such as a receiver coil and means for rectifying an alternating current induced in the receiver coil.

When scanning for advertisements, the hearing device may be configured to pause or stop other processes running on the hearing device, such as e.g. audio streaming, sound processing, etc. Thus, the hearing device may be configured to stop or pause any audio streaming it was providing when a scan for advertisements is initiated. In particular, the hearing device may be configured to pause or stop active battery-requiring processes, during the scan for broadcasts, for example to ensure that enough power is available to perform the scan, and/or to conserve battery power, and/or to free up resources such as memory, or other. The hearing device may be configured to pause a process for the duration of the scan and automatically resume the process at a time after the scan is finished, for example just after the scan is finished and/or a set time after the scan is finished. The hearing device may be configured to determine active processes running on the hearing device, and, optionally, determine whether to pause one or more active processes. In some embodiments, the hearing device may be configured to determine battery-drain data for one or more of the active processes, where the battery-drain data may comprise one or more of: how much power is being drained by the active process, and/or an estimate of the battery requirement for the continued running of the active process. In some embodiments, the determination of whether to pause one or more active processes is based at least partially on the battery-drain data. The determination of whether to pause one or more active processes may additionally, or optionally, be based at least partially on available battery power.

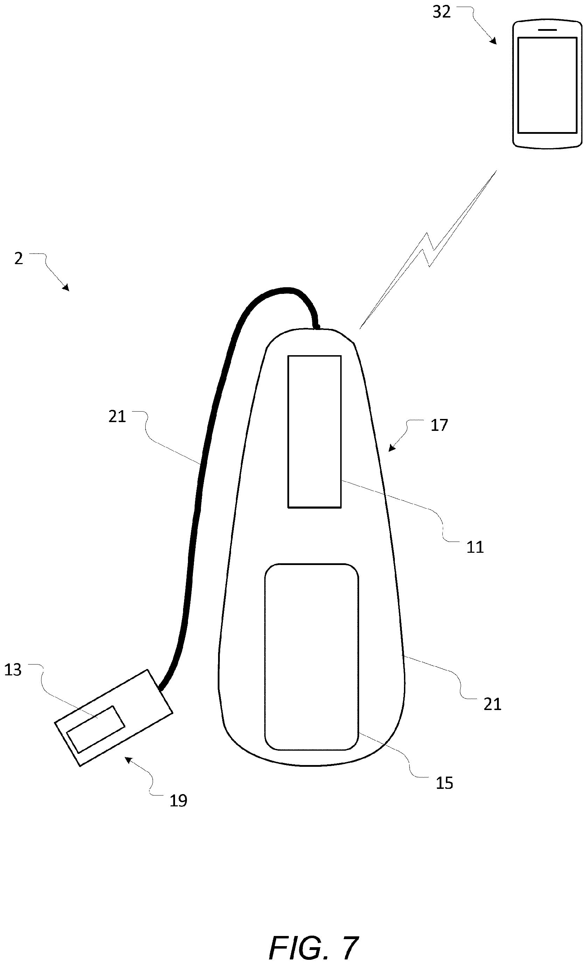

**FIG. 7** schematically illustrates a behind-the-ear hearing device 2 according to some embodiments. The hearing device 2 is a hearing device primarily worn on the outside of the user's ear. It has a behind-the-ear part 17 made to be positioned behind the ear of the user, an in-the-ear part 19 positioned within the ear of the user during use, and a tube 21 connecting the behind-the-ear part 17 and the in-the-ear part 19. The hearing device may be a hearing aid and may be one of the hearing aids known as a receiver-in-ear (RIE), a microphone-and-receiver-in-ear (MaRIE), or a behind-the-ear (BTE) hearing aid. The drawing illustrates both the outline of the hearing device 2 as well as some of the internal components of the hearing device 2 in a partially transparent view.

To protect the components within the hearing device 2, the hearing device 2 is designed to keep out ear wax, dirt, water, oil etc. The behind-the-ear part 17 is made up of a shell 21, which is designed to keep out dirt, water, sweat, oil, etc., and the part of the in-the-ear part 19, which sits in the user's ear during use, must additionally be designed to withstand the environment of the ear and the ear canal, which comprises e.g. ear wax.

The behind-the-ear part 17 may comprise one or more microphone openings and possibly one or more buttons, switches, etc. with which the user can interact with, for example to change settings and/or turn the hearing device 2 on/off, initiate, or continue, a scanning for broadcasted audio streams.

The hearing device 2 has hearing device components arranged within the behind-the-ear part 17, such as electronics 11, where the electronics 7 may be electronic components and circuits that create, process, and/or cancel audible sound. The receiver 13, and possibly one or more microphones, is arranged in the in-the-ear part 19 such that it is close to the eardrum ED of the user when the in-the-ear part 19 is inserted into the user's ear canal EC. The in-the-ear part 19 may comprise various additional electronics components.

To supply power to electronic components 11 within the hearing device 2, the hearing device 2 has a battery 15, which may be non-rechargeable or rechargeable, such as rechargeable via inductive charging.

The behind-the-ear hearing device 2 shown in fig. 7 may be configured similarly to the in-the-ear hearing device 1 shown in fig. 6.

The hearing device 2 is configured to wirelessly communicate with an assistant device 32.

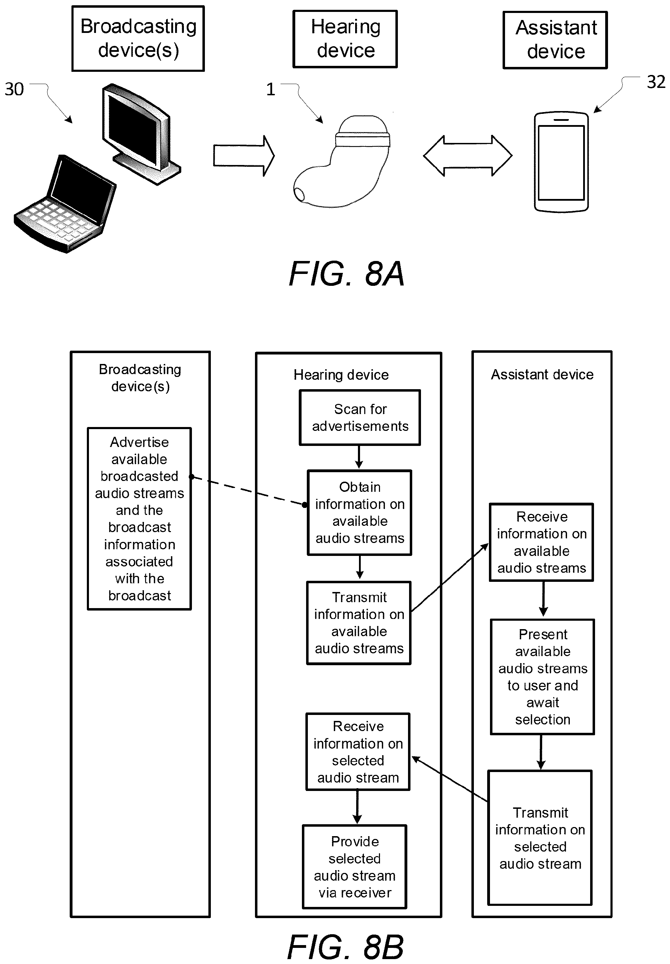

**FIGS. 8A and 8B** show swim lane diagrams of a method of providing a broadcasted audio stream according to some embodiments. The diagrams illustrate the sharing of data to and from a broadcasting system, a hearing device, and an assistant device.

**In** **FIG. 8A** is illustrated how one or more broadcasting devices 30 each sends out an advertisement of one or more available broadcasted audio streams and the audio streaming protocol associated with each audio stream. An audio streaming protocol may be e.g. a Bluetooth audio streaming protocol, such as Bluetooth LE Audio.

The advertisements are obtained by a hearing device, illustrated by an in-ear hearing device 1, while the hearing device scans for advertisements whereby it obtains broadcast information on the available broadcasted audio streams as disclosed herein.

The hearing device 1 transmits the broadcast information to an assistant device 32, which presents the available broadcasted audio streams to a user of the assistant device. The assistant device then awaits user selection of a broadcasted audio streams. After a user has made a selection, the user-selected broadcasted audio stream is transmitted from the assistant device and received by the hearing device, which then provides the audio stream to the user of the hearing device. The user of the assistant device may be different from the user of the hearing device.

**In** **FIG. 8B** is illustrated in detail how the hearing device receives and shares data. Each column shown corresponds to the elements shown and described in connection with FIG. 8A.

A broadcasting device 30 advertises the audio streams it is broadcasting and broadcast information such as name, codec etc. associated with the broadcast. The broadcasting may e.g. be made using a Bluetooth LE audio sharing protocol.

A hearing device, such as an in-ear hearing device 1, scans for advertisements of broadcasted audio streams and obtains broadcast information on the available streams.

The broadcast information is transmitted to an assistant device 32, which presents the available audio streams to a user, for example as a list. The assistant device then awaits user-selection of a presented available broadcasted audio stream. After a user has made a selection information on the user-selection is transmitted from the assistant device to the hearing device.

In response to receiving the information on the user-selection, the hearing device provides the selected audio stream to a user via its receiver.

### LIST OF REFERENCES

- 1: In-ear hearing device
- 2: BTE hearing device
- 3: Sidewalls
- 5: Faceplate
- 7: Faceplate surface
- 9: In-ear part
- 11: Electronics
- 13: Receiver
- 15: Battery
- 17: Behind-the-ear part
- 19: In-the-ear part of BTE hearing device
- 21: Shell
- 23: Flexible arm
- 30: Broadcasting device
- 32: Assistant device
- 100: Start
- 105: Scan request
- 110: Determine active process(es)
- 115: Stop/pause active process(es)
- 120: Scanning for advertisements
- 125: Transmitting broadcast information
- 130: Resuming active process(es)
- 135: Presenting available broadcasted audio streams to user
- 140: Awaiting user selection
- 145: Transmitting user-selection
- 150: Providing broadcasted audio stream to user
- 160: End
- EC: Ear canal
- P: Pinna
- T: Tympanic membrane

## Claims

1. **A method of providing a broadcasted audio stream using a hearing device configured for being worn at an ear of a user and an assistant device,** the method comprising:
- scanning for advertisements of available broadcasted audio streams and an associated audio streaming protocol, and thereby obtaining broadcast information comprising data on available broadcasted audio streams,
- transmitting the broadcast information to an assistant device,
- presenting, by the assistant device, the available broadcasted audio streams to a user based on the received broadcast information, and awaiting user-selection of a broadcasted audio stream,
- transmitting user-selection information comprising data on the user-selected broadcasted audio stream from the assistant device to the hearing device, and
- providing, by the hearing device, the user-selected broadcasted audio stream,
wherein scanning for advertisements and transmission of broadcast information is performed by the hearing device.

2. A method according to claim 1, wherein the method further comprises: the hearing device being connected with the assistant device via a wired and/or a wireless connection, such as via a Bluetooth connection.

3. A method according to claim 2, wherein connection between the hearing device and the assistant device is maintained during the scanning for advertisements.

4. A method according to any of the previous claims, wherein the scanning for advertisements is performed for a scan duration being a limited period of time, such as for a pre-determined period of time and/or for a user-selected period of time.

5. A method according to claim 4, wherein the scan duration is set by the user actively interacting with the assistant device or with the hearing device, such as for a duration of time during which a user is actively requesting a scan.

6. A method according to any of the previous claims, wherein the step of scanning for advertisements further comprises the hearing device determining active processes running on the hearing device, and, optionally, the hearing device further determining whether to pause one or more active processes.

7. A method according to any of the previous claims, wherein the step of scanning for advertisements further comprises the hearing device stopping or pausing any audio streaming it was providing when it initiates the scanning for advertisements.

8. A method according to any of the previous claims, wherein the method further comprises: sending a scan request, from the assistant device to the hearing device, and the step of scanning for advertisements further comprising: the scanning being initiated in response to the scan request.

9. A method according to any of the previous claims, wherein the scanning for advertisements is initiated in response to a user interaction, such as a user interaction with the hearing device or a user interaction with the assistant device.

10. **A hearing device configured for being worn at an ear of a user,** the hearing device comprising a wireless communications unit configured to scan for advertisements of available broadcasted audio streams and an associated audio streaming protocol, and thereby obtain broadcast information comprising data on available broadcasted audio streams, the hearing device being configured to:
- transmit the broadcast information to an assistant device,
- receive user-selection information comprising data on a user-selected broadcasted audio stream from the assistant device, and
- provide the user-selected broadcasted audio stream to a user.

11. A hearing device according to claim 10, wherein the hearing device is further configured to maintain pairing between the hearing device and the assistant device during a scan for advertisements.

12. A hearing device according to any of claims 10-11, wherein the hearing device is further configured to perform a scan for advertisements for a period of time, such as for a pre-determined period of time and/or for a user-selected period of time.

13. A hearing device according to any of claims 10-12, wherein the hearing device is further configured to perform a scan for advertisements exclusively for a duration of time during which the assistant device is requesting, such as intermittently requesting, a scan and/or for at duration of time during which a user is actively interacting with the hearing device.

14. A hearing device according to any of claims 10-13, wherein the hearing device is further configured to determine active processes running on the hearing device, and, optionally, the hearing device is further configured to determine whether to pause one or more active processes.

15. A hearing device according to any of claims 10-14, wherein the hearing device is further configured to stop or pause any audio streaming it was providing when a scan for advertisements is initiated.

16. A hearing device according to any of claims 10-15, wherein the hearing device is further configured to initiate a scan for advertisements in response to a scan request from the assistant device and/or in response to a user interaction with the hearing device.
